# FASCICULE DE BREVET EUROPEEN

(11) **EP 3 315 214 B1**
(45) Date de publication et mention de la délivrance du brevet: **15.07.2020**
(21) Numéro de dépôt: 16195445.8
(22) Date de dépôt: 25.10.2016
(51) Int. Cl.: B05D 5/08, B05D 1/00

(54) **PROCÉDÉ D'ÉPILAMAGE D'UN ÉLEMENT D'UNE PIÈCE D'HORLOGERIE OU DE BIJOUTERIE**
VERFAHREN ZUR EPILAMISIERUNG EINES ELEMENTS EINER UHR ODER EINES SCHMUCKSTÜCKS
METHOD FOR EPILAME COATING OF A TIMEPIECE OR PIECE OF JEWELLERY

(43) Date de publication de la demande: 02.05.2018
(73) Titulaire: The Swatch Group Research and Development Ltd, 2074 Marin (CH)
(72) Inventeur: Rannoux, Claire, 1110 Morges (CH); Letondor, Christophe, 2525 Le Landeron (CH); François, Nicolas, 2000 Neuchâtel (CH)
(74) Mandataire: ICB SA

(56) Documents cités:
- EP-A1- 3 070 133
- WO-A1-2013/167624
- WO-A2-2007/013881
- CH-A- 286 867
- DE-A1-102013 226 215
- US-A- 2 897 778
- US-A1- 2012 088 099

## Description

### Domaine de l'invention

La présente invention se rapporte au domaine de la mécanique et notamment au domaine de l'horlogerie ou de la bijouterie. Elle concerne plus particulièrement un procédé d'épilamage d'au moins une partie d'une surface d'un substrat présent dans une pièce d'horlogerie ou de bijouterie.

### Arrière-plan de l'invention

Il existe différents procédés pour modifier l'état de surface d'un substrat par un traitement au moyen d'un agent approprié de manière à améliorer spécifiquement certaines propriétés de surface. Par exemple, dans le domaine de la mécanique, et en particulier dans le domaine de l'horlogerie, mais aussi dans le domaine de la bijouterie, l'épilamage d'une surface d'une pièce ou d'un élément est souvent réalisé au moyen d'un agent épilame afin de contrôler et de réduire l'énergie de surface de ladite surface au cours de son utilisation. Plus particulièrement, un agent épilame a pour but d'empêcher l'étalement des huiles ou lubrifiants sur les éléments d'une pièce d'horlogerie ou de bijouterie en formant une couche moléculaire invisible hydrophobe et lipophobe à la surface de l'élément permettant au lubrifiant de rester à un endroit prédéterminé de la surface traitée et ainsi d'éviter son étalement. Le maintien du lubrifiant dans sa zone de fonctionnement permet d'augmenter sa durabilité.

A l'heure actuelle, la grande majorité des agents épilames disponibles sur le marché, tels que le Fixodrop® FK/BS de Moebius® ou la gamme Fluorad™ de 3M™ (FC-722 et autres), consiste en un polymère fluoré dissous dans un solvant perfluoré ou fluoré. Le procédé d'épilamage est traditionnellement réalisé par trempage (dip coating) des pièces à épilamer dans un bain d'épilamage constitué d'une solution de solvant perfluoré ou fluoré chargée en agent épilame.

Les solvants fluorés les plus utilisés jusqu'à récemment étaient le tétradécafluorohexane et le HFE-7100 de 3M™. Toutefois, le tétradécafluorohexane notamment présente l'inconvénient de constituer, une fois volatilisé, un gaz à effet de serre, puisqu'il reste stable 3200 ans dans l'air et a un potentiel à effet de serre de 7400 équivalent-CO₂.

L'utilisation de tels solvants ayant été interdite par de nouvelles réglementations environnementales, il a été développé de nouveaux solvants fluorés. Cependant, même si ces solvants fluorés nouvelle génération (tels que le HFE-7200 de 3M™) sont moins stables dans l'air, ils ont encore un impact sur l'environnement. Ils nécessitent de ce fait d'utiliser des machines ou autres équipements clos et risquent d'être impactés par de futures réglementations encore plus sévères. De plus, ces solvants fluorés nouvelle génération sont relativement onéreux.

Pour remplacer le procédé d'épilamage traditionnel utilisant des solvants fluorés polluants et onéreux, la demande EP 1 927 648 propose un procédé d'épilamage avec une solution de molécule épilame dans un mélange eau/propanol. Ce procédé d'épilamage présente l'inconvénient de ne pouvoir être utilisé qu'avec un nombre très limité d'agents épilames puisque les molécules épilames doivent être solubles dans le mélange eau/propanol. Or il est bien connu de l'homme du métier que les meilleures propriétés épilames sont obtenues avec des molécules fluorées qui présentent donc une très faible solubilité dans un mélange eau/propanol.

Enfin, les concentrations en agent épilame utilisées dans le procédé d'épilamage traditionnel par trempage sont très faibles (typiquement comprises entre 20 mg/L et 250 mg/L) et les solvants fluorés utilisés sont volatils (température d'ébullition inférieure à 100°C). De ce fait, la gestion industrielle des bains d'épilamage est complexe au quotidien car il est nécessaire de régulièrement contrôler par dosage la concentration en agent épilame dans le bain d'épilamage et d'ajouter une solution concentrée en agent épilame ou du solvant en fonction de l'évolution de la composition du bain d'épilamage.

Du document DE 10 2013 226 215, on connaît un procédé d'épilamage d'au moins une partie de la surface d'un substrat selon le préambule de la revendication 1.

### Résumé de l'invention

L'invention a notamment pour objectif de pallier les différents inconvénients des procédés d'épilamage connus.

Plus précisément, un objectif de l'invention est de fournir un nouveau procédé d'épilamage permettant d'obtenir un épilamage de qualité identique ou supérieure à celle obtenue avec un procédé d'épilamage traditionnel par trempage.

L'invention a également pour objectif de fournir un nouveau procédé d'épilamage écologique permettant de supprimer l'utilisation d'une quantité importante de solvants fluorés polluants.

L'invention a également pour objectif de fournir un nouveau procédé d'épilamage économique permettant de supprimer l'utilisation d'une quantité importante de solvants fluorés onéreux.

L'invention a également pour objectif de fournir un nouveau procédé d'épilamage permettant de simplifier la gestion au quotidien des bains d'épilamage.

A cet effet, la présente invention concerne un procédé d'épilamage d'au moins une partie d'une surface d'un substrat comprenant les étapes de :
a) préparation d'un agent épilame
b) optionnellement, préparation de la surface du substrat
c) placement du substrat et de l'agent épilame dans une enceinte à pression ambiante
d) introduction dans l'enceinte fermée hermétiquement de CO₂ à une pression comprise entre 25 bar et 74 bar et à une température comprise entre 10°C et 80°C pendant une durée comprise entre 1 min et 30 min,
e) diminution de la pression dans l'enceinte, et
f) sortie du substrat épilamé de l'enceinte,
le procédé étant caractérisé en ce que l'agent épilame est sous forme d'une solution dans un solvant, sa concentration dans le mélange solvant/CO₂ étant comprise entre 10 mg et 5 g pour 1000 g de mélange (CO₂+solvant), de préférence entre 50 mg et 1 g pour 1000 g de mélange (CO₂+solvant), encore plus préférentiellement entre 100 mg et 500 mg pour 1000 g de mélange (CO₂+solvant).

Selon l'invention, le CO₂ est utilisé sous une forme proche des conditions supercritiques pour véhiculer l'agent épilame et réaliser le dépôt d'une couche moléculaire invisible hydrophobe et oléophobe dudit agent épilame. Ainsi, le procédé selon l'invention diminue drastiquement voire ne nécessite plus l'utilisation de solvant fluoré, de sorte que le procédé de l'invention est écologique et économique, tout en préservant la qualité de l'épilamage.

### Description détaillée de l'invention

Le procédé d'épilamage concerne le dépôt d'une couche d'un agent épilame à la surface d'un substrat appartenant généralement à un élément d'une pièce d'horlogerie ou de bijouterie destiné à être en contact avec un agent lubrifiant. La couche d'agent épilame forme une couche moléculaire invisible hydrophobe et oléophobe, permettant d'éviter l'étalement du lubrifiant.

Conformément à l'invention, le procédé d'épilamage d'au moins une partie d'une surface dudit substrat comprend les étapes de :
a) préparation d'un agent épilame
b) optionnellement, préparation de la surface du substrat
c) placement du substrat et de l'agent épilame dans une enceinte à pression ambiante, soit une pression comprise entre 0.6 bar et 1.1 bar, et fermeture hermétique de l'enceinte
d) introduction dans l'enceinte fermée hermétiquement de CO₂ à une pression comprise entre 25 bar et 74 bar, de préférence entre 45 bar et 70 bars, et plus préférentiellement entre 50 bar et 60 bar, et à une température comprise entre 10°C et 80°C, et de préférence entre 25°C et 60°C, et plus préférentiellement entre 30°C et 50°C, pendant une durée comprise entre 1 min et 30 min, de préférence entre 1 min et 20 min, et plus préférentiellement entre 3 min et 15 min,
e) diminution de la pression dans l'enceinte, et
f) sortie du substrat épilamé de l'enceinte.

En général, conformément à l'étape b), la surface du substrat doit être soigneusement nettoyée avant l'épilamage pour être parfaitement propre. Tous les traitements de préparation de surface appropriés connus de l'homme du métier peuvent être utilisés. Toutefois, d'une manière avantageuse, l'étape b) peut comprendre un traitement de la surface du substrat par CO₂ à une température comprise entre 10°C et 80°C et une pression comprise entre 25 bar et 250 bar, pendant une durée comprise entre 1 min et 60 min. Un tel traitement permet notamment l'élimination de poussières particules et le dégraissage de la surface. D'une manière avantageuse, le traitement selon l'étape b) est réalisé dans la même enceinte que celle prévue pour l'étape d), ce qui permet de pouvoir enchainer les différentes étapes du procédé de l'invention en évitant toute manipulation des pièces. Dans ce cas, l'enceinte dans laquelle a été placé le substrat est fermée pour la mise en œuvre de l'étape b), puis ouverte pour y placer l'agent épilame selon l'étape c) puis refermée pour la mise en œuvre de l'étape d).

D'une manière particulièrement avantageuse, tout agent épilame connu peut être utilisé dans le procédé de l'invention. De préférence, l'agent épilame est un polymère fluoré, et de manière avantageuse l'agent épilame est choisi parmi le groupe des agents épilames décrits dans la demande de brevet EP 3 070 133 du même déposant. Par ce choix, on obtient avantageusement un film épilame qui résiste aux lavages horlogers.

Selon une première variante de mise en œuvre non revendiquée, l'agent épilame peut être placé dans l'enceinte sous une forme pure.

Selon une seconde variante de mise en œuvre selon l'invention, l'agent épilame peut être placé dans l'enceinte sous la forme d'une solution dans un solvant. En fonction du volume de l'enceinte et de la pression en CO₂, on déterminera un volume et une concentration adéquate de la solution en agent épilame de façon à avoir une concentration de l'agent épilame dans le mélange solvant/CO₂ comprise entre 10 mg et 5 g pour 1000 g de mélange (CO₂+solvant), de préférence entre 50 mg et 1 g pour 1000 g de mélange (CO₂+solvant), encore plus préférentiellement entre 100 mg et 500 mg pour 1000 g de mélange (CO₂+solvant).

De préférence, ledit solvant est un solvant organique, de préférence un solvant fluoré, et plus préférentiellement une perfluorooléfine.

De ce fait, lorsque l'agent épilame est en solution dans un solvant fluoré, la quantité de solvant fluoré mise en œuvre dans le procédé de l'invention est très faible par rapport à la quantité utilisée pour un bain d'épilamage traditionnel.

De préférence, la diminution de la pression dans l'enceinte lors de l'étape e) se fait lentement, pendant une durée comprise entre quelques secondes et quelques minutes, par exemple entre 5 s et 10 min. Avantageusement, le CO₂ est récupéré et recyclé. Avantageusement, l'agent épilame est récupéré et réutilisé pour l'épilamage d'un batch ultérieur.

D'une manière préférée, le procédé d'épilamage selon l'invention comprend en outre, entre les étapes e) et f), une étape g) supplémentaire de traitement thermique du substrat épilamé. Par exemple, le substrat épilamé est chauffé dans l'enceinte à une température comprise entre 30°C et 80°C pendant une durée comprise entre 2 min et 30 min. Un tel traitement thermique permet d'améliorer l'ancrage de l'agent épilame à la surface du substrat traité.

Avantageusement, la surface du substrat dont au moins une partie est recouverte de l'agent épilame est réalisée dans un matériau choisi parmi le groupe comprenant les métaux, les oxydes métalliques, les polymères, le saphir, le rubis, le silicium, les oxydes de silicium, les nitrures de silicium, les carbures de silicium, les DLC (Diamond Like Carbon), et leurs alliages.

Plus précisément, la surface du substrat peut être réalisée en acier, ou en métaux nobles tels que or, rhodium, palladium, platine, ou en oxydes métalliques, dopés ou non d'aluminium, zirconium, titane, chrome, manganèse, magnésium, fer, nickel, cuivre, zinc, molybdène, argent, tungstène, ainsi que leurs alliages, ou en polyoxyméthylène ou en acrylamide.

Le procédé selon l'invention permet un traitement par batch des pièces. De plus, l'ensemble des différentes étapes peut s'effectuer dans une seule et même enceinte, ce qui évite toute manipulation inutile. Le procédé selon l'invention permet de supprimer l'utilisation d'un bain d'épilamage à base de solvant fluoré polluant et onéreux, et de surcroit de supprimer tout contrôle du bain d'épilamage. Il est donc écologique, économique, et facile à mettre en œuvre. De plus, le procédé selon l'invention permet d'obtenir une qualité d'épilamage au moins identique à la qualité obtenue avec un procédé d'épilamage traditionnel par trempage. Notamment, les substrats traités selon le procédé de l'invention ne présentent pas de trace résiduelle d'agent épilame, l'efficacité de l'agent épilame est similaire et la résistance aux lavages de l'agent épilame déposé est au moins identique.

Les exemples suivants illustrent la présente invention sans toutefois en limiter la portée.

On utilise comme agent épilame un composé décrit dans la publication EP 3 070 133 du même déposant, de formule représentée ci-dessous :

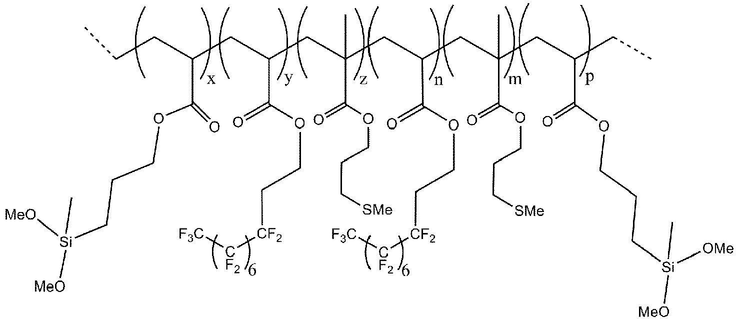

### Procédures utilisées :

### Préparation des substrats :

Avant le traitement épilame, des substrats de différente nature sont nettoyés par les procédés horlogers standards. Plus particulièrement, les pièces sont nettoyées avec une solution de Rubisol en présence d'ultrasons, rincées plusieurs fois avec de l'alcool isopropylique, puis séchées à l'air chaud.

### Traitement épilame des substrats selon l'invention (CO₂ assisté) :

Conformément à l'invention on introduit dans un autoclave (255 mL) :
- des substrats de différente nature à épilamer
- 30 mL d'une solution d'agent épilame à 1g/L dans le Vertrel Suprion L'autoclave est fermé puis 225mL de CO₂ à une pression de 55 bars et à une température de 40°C sont introduits dans l'autoclave. La durée d'épilamage est fixée à 10 min puis l'autoclave est dépressurisé lentement (temps de dépressurisation 40s) et chauffé à 65°C pendant 15 min. Enfin les substrats épilamés sont récupérés et analysés.

### Exemple comparatif : Epilamage par le procédé de trempage (Dip Coating)

Les substrats sont épilamés par immersion (environ 5 min) dans une solution de l'agent épilame (structure indiquée ci-dessus) (solvant : Vertrel® Suprion™ de DuPont™ à 250mg/L) puis séchage à l'air chaud.

### Efficacité et propriété de l'épilamage :

### - Aspect esthétique :

Les substrats épilamés selon le procédé de l'invention (CO₂ assisté) et le procédé comparatif (dip coating) sont contrôlés à l'œil. Dans les deux cas, le film d'épilame est invisible.

### - Angles de contact :

L'efficacité de l'agent épilame est évaluée par le dépôt de gouttes de lubrifiants : huile MOEBIUS 9010. L'angle de contact entre les substrats et le lubrifiant a été mesuré sur un appareil Dataphysics de type OCA.

Les résultats sont les suivants :

| | Substrats | | | | | |
|---|---|---|---|---|---|---|
| Procédé d'épilamage | Saphir | Acier | Or | Ni | Rh | Polyoxyde de méthylene |
| CO₂ assisté (inv.) | 85 | 86 | 87 | 84 | 82 | 84 |
| Dip coating (comp.) | 81 | 83 | 85 | 78 | 78 | 87 |

### - La résistance aux lavages

La résistance aux lavages des agents épilames est évaluée après 3 lavages successifs (lavage horloger standard avec une solution de Rubisol) des pièces épilamées.

Les résultats sont les suivants :

| | Substrats | | | | | |
|---|---|---|---|---|---|---|
| Procédé d'épilamage | Saphir | Acier | Or | Ni | Rh | Polyoxyde de méthylene |
| CO₂ assisté (inv.) | 78 | 83 | 83 | 70 | 65 | 85 |
| Dip coating (comp.) | 77 | 82 | 78 | 48 | 71 | 73 |

### Conclusion :

Les résultats ci-dessus montrent que les angles de contact obtenus juste après épilamage et après trois lavages horlogers avec l'huile 9010 sont comparables entre le procédé de l'invention (CO₂ assisté) et le procédé comparatif (dip coating). Dans certains cas (substrats Ni ou POM), la résistance au lavage de l'agent épilame est même légèrement supérieure lorsque celui-ci est déposé par le procédé de l'invention. Ceci montre que le procédé par trempage (dip coating), qui consomme beaucoup de solvant, peut être avantageusement remplacé par un procédé d'épilamage assisté par CO₂ selon l'invention, qui est écologique et économique, sans dégradation des performances (épilamage et résistance de l'épilamage).

## Revendications

1. Procédé d'épilamage d'au moins une partie d'une surface d'un substrat comprenant les étapes de :
a) préparation d'un agent épilame
b) optionnellement, préparation de la surface du substrat
c) placement du substrat et de l'agent épilame dans une enceinte à pression ambiante
d) introduction dans l'enceinte fermée hermétiquement de CO₂ à une pression comprise entre 25 bar et 74 bar, de préférence entre 45 et 70 bars, et plus préférentiellement entre 50 bar et 60 bar, et à une température comprise entre 10°C et 80°C, et de préférence entre 25°C et 60°C, et plus préférentiellement entre 30°C et 50°C, pendant une durée comprise entre 1 min et 30 min, de préférence entre 1 min et 20 min, et plus préférentiellement entre 3 min et 15 min,
e) diminution de la pression dans l'enceinte, et
f) sortie du substrat épilamé de l'enceinte,
le procédé étant **caractérisé en ce que** l'agent épilame est sous forme d'une solution dans un solvant, sa concentration dans le mélange solvant/CO₂ étant comprise entre 10 mg et 5 g pour 1000 g de mélange (CO₂+solvant), de préférence entre 50 mg et 1 g pour 1000 g de mélange (CO₂+solvant), encore plus préférentiellement entre 100 mg et 500 mg pour 1000 g de mélange (CO₂+solvant).

2. Procédé d'épilamage selon la revendication 1, **caractérisé en ce que** le procédé comprend en outre, entre les étapes e) et f), une étape g) de traitement thermique du substrat épilamé.

3. Procédé d'épilamage selon l'une des revendications précédentes, **caractérisé en ce que** l'étape b) comprend un traitement par CO₂ à une température comprise entre 10°C et 80°C et une pression comprise entre 25 bar et 250 bar.

4. Procédé d'épilamage selon la revendication 1, **caractérisé en ce que** le solvant est un solvant fluoré.

5. Procédé d'épilamage selon l'une des revendications précédentes, **caractérisé en ce que** l'agent épilame est un polymère fluoré.

6. Procédé d'épilamage selon l'une des revendications précédentes, **caractérisé en ce que** la surface du substrat dont au moins une partie est recouverte de l'agent épilame est réalisée dans un matériau choisi parmi le groupe comprenant les métaux, les oxydes métalliques, les polymères, le saphir, le rubis, le silicium, les oxydes de silicium, les nitrures de silicium, les carbures de silicium, les DLC (Diamond Like Carbon), et leurs alliages.

7. Procédé d'épilamage selon l'une des revendications précédentes, **caractérisé en ce que** le substrat appartient à un élément d'une pièce d'horlogerie ou de bijouterie.

## Patentansprüche

1. Verfahren zur Epilamierung mindestens eines Teils einer Oberfläche eines Substrats, umfassend die folgenden Schritte:
a) Zubereiten eines Epilame-Mittels,
b) optional Vorbereiten der Substratoberfläche,
c) Einbringen des Substrats und des Epilame-Mittels in eine Kammer bei Umgebungsdruck,
d) Einleiten von CO₂ in die hermetisch geschlossene Kammer bei einem Druck im Bereich von 25 bar bis 74 bar, vorzugsweise von 45 bar bis 70 bar und besonders bevorzugt von 50 bar bis 60 bar und bei einer Temperatur im Bereich von 10 °C bis 80 °C, vorzugsweise von 25 °C bis 60 °C und besonders bevorzugt von 30 °C bis 50 °C für einen Zeitraum im Bereich von 1 Minute bis 30 Minuten, vorzugsweise von 1 Minute bis 20 Minuten und besonders bevorzugt von 3 Minuten bis 15 Minuten,
e) Verringern des Drucks in der Kammer,
f) Entnehmen des epilamierten Substrats aus der Kammer,
wobei das Verfahren **dadurch gekennzeichnet ist, dass** das Epilame-Mittel in Form einer Lösung in einem Lösungsmittel vorliegt, wobei seine Konzentration in dem Lösungsmittel/CO₂-Gemisch im Bereich von 10 mg bis 5 g pro 1000 g des Gemisches (CO₂ + Lösungsmittel), vorzugsweise von 50 mg bis 1 g pro 1000 g des Gemisches (CO₂ + Lösungsmittel) und besonders bevorzugt von 100 mg bis 500 mg pro 1000 g des Gemisches (CO₂ + Lösungsmittel) beträgt.

2. Verfahren zur Epilamierung nach Anspruch 1, **dadurch gekennzeichnet, dass** das Verfahren ferner zwischen den Schritten e) und f) einen Schritt g) der Wärmebehandlung des epilamierten Substrats umfasst.

3. Verfahren zur Epilamierung nach einem der vorhergehenden Ansprüche, **dadurch gekennzeichnet, dass** Schritt b) eine Behandlung mit CO₂ bei einer Temperatur im Bereich von 10 °C bis 80 °C und bei einem Druck im Bereich von 25 bar bis 250 bar umfasst.

4. Verfahren zur Epilamierung nach Anspruch 1, **dadurch gekennzeichnet, dass** das Lösungsmittel ein fluoriertes Lösungsmittel ist.

5. Verfahren zur Epilamierung nach einem der vorhergehenden Ansprüche, **dadurch gekennzeichnet, dass** das Epilame-Mittel ein fluoriertes Polymer ist.

6. Verfahren zur Epilamierung nach einem der vorhergehenden Ansprüche, **dadurch gekennzeichnet, dass** die Substratoberfläche, von der mindestens ein Teil mit dem Epilame-Mittel bedeckt ist, aus einem Material hergestellt ist, das aus der Gruppe ausgewählt ist, die Metalle, Metalloxide, Polymere, Saphir, Rubin, Silizium, Siliziumoxide, Siliziumnitride, Siliziumcarbide, DLC (Diamond Like Carbon) und ihre Legierungen umfasst.

7. Verfahren zur Epilamierung nach einem der vorhergehenden Ansprüche, **dadurch gekennzeichnet, dass** das Substrat zu einem Element einer Uhr oder eines Schmuckstücks gehört.

## Claims

1. Epilamization method of at least one part of a substrate surface comprising the steps of:
a) preparing an epilame agent,
b) optionally, preparing the substrate surface,
c) placing the substrate and the epilame agent in a chamber at ambient pressure,
d) introducing CO₂ into the hermetically sealed chamber at a pressure comprised between 25 bar and 74 bar, preferably between 45 bar and 70 bar, and more preferably between 50 bar and 60 bar, and at a temperature comprised between 10°C and 80°C, and preferably between 25°C and 60°C, and more preferably between 30°C and 50°C, for a duration comprised between 1 minute and 30 minutes, preferably between 1 minute and 20 minutes, and more preferably between 3 minutes and 15 minutes,
e) reducing the pressure in the chamber, and
f) removing the epilamized substrate from the chamber,
the method being **characterized in that** the epilame agent is in the form of a solution in a solvent, the concentration thereof in the solvent/CO₂ mixture being comprised between 10 mg and 5 g per 1000 g of mixture (CO₂+solvent), preferably between 50 mg and 1 g per 1000 g of mixture (CO₂+solvent), more preferably between 100 mg and 500 mg per 1000 g of mixture (CO₂+solvent).

2. Epilamization method according to claim 1, **characterized in that** the method further comprises, between steps e) and f), a step g) of heat treatment of the epilamized substrate.

3. Epilamization method according to any of the preceding claims, **characterized in that** step b) comprises a CO₂ treatment at a temperature comprised between 10°C and 80°C and a pressure comprised between 25 bar and 250 bar.

4. Epilamization method according to claim 1, **characterized in that** the solvent is a fluorinated solvent.

5. Epilamization method according to any of the preceding claims, **characterized in that** the epilame agent is fluorinated polymer.

6. Epilamization method according to any of the preceding claims, **characterized in that** the surface of the substrate, at least part of which is coated with the epilame agent, is made of a material chosen from the group comprising metals, metal oxides, polymers, sapphire, ruby, silicon, silicon oxides, silicon nitrides, silicon carbides, DLC (Diamond like carbon), and alloys thereof.

7. Epilamization method according to any of the preceding claims, **characterized in that** the substrate belongs to an element of a timepiece or of a piece of jewellery.
